# EUROPEAN PATENT APPLICATION

(11) **EP 4 425 757 A1**
(43) Date of publication of application: **04.09.2024**
(21) Application number: 23159547.1
(22) Date of filing: 02.03.2023
(51) Int. Cl.: H02K 1/32, H02K 5/20, H02K 7/102, H02K 9/19

(54) **HYDRAULICALLY BRAKEABLE ELECTRICAL MACHINE**

(71) Applicant: VOLVO TRUCK CORPORATION, 405 08 Göteborg (SE)
(72) Inventor: ANDERSSON, Rasmus, 422 49 Hisings Backa (SE); LORD, John, 424 72 Olofstorp (SE)
(74) Representative: Ström & Gulliksson AB

(57) **Abstract**

An electrical machine (100) is presented. The electrical machine (100) comprises a rotor (120), a stator (110), a housing (130) and a first and a second fluid chamber (140, 150) in fluid communication via at least one fluid passage (125) of the rotor (120). The rotor (120) upon rotation is adapted to provide a difference in pressure between the first fluid chamber (140) and the second fluid chamber (150) by transfer of fluid (102) there between, whereby a braking torque is exerted on the rotor (120).

## Description

### TECHNICAL FIELD

The disclosure relates generally to electrical machines. In particular aspects, the disclosure relates to hydraulically breakable electrical machines. The disclosure can be applied to general electrical machines and in particular to electrical propulsion machines for heavy-duty vehicles, such as trucks, buses, and construction equipment, among other vehicle types. Although the disclosure may be described with respect to a particular vehicle, the disclosure is not restricted to any particular vehicle.

### BACKGROUND

Modem vehicles may be provided with electrical machines. One particular use of electric machines in vehicles is for traction purpose, i.e. the electrical machines are arranged as part of the drive train to perform the desired propulsion of the vehicle. These electrical machines are connected to one or more battery arrangements which provide the electrical machines with the required electrical power.

Electrical machines can also be used to provide retardation of the vehicle, changing the operational mode of the electrical machine from propulsion mode to regeneration mode. In such case the regeneration of electrical power will cause a retarding effect on the vehicle.

However, braking of the electric vehicle using the electrical machine can only be performed as long as the associated battery arrangement is capable of receiving the regenerated electrical power. If the battery arrangement is fully (or close to fully) charged, braking can no longer be achieved by means of the electrical machine.

Some vehicles utilize a brake resistor to dissipate excess power from regenerative braking also when the battery arrangement is fully charged. This option is comparably expensive.

Based on this, there is a need for improved solutions enabling the electrical machine of a vehicle to brake the vehicle even if the associated battery arrangement is not capable of receiving the generated electrical power.

### SUMMARY

In a first aspect, an electrical machine is presented. The electrical machine comprises a rotor, a stator, a housing and a first and a second fluid chamber in fluid communication via at least one fluid passage of the rotor. The rotor, upon rotation, is adapted to provide a difference in pressure between the first fluid chamber and the second fluid chamber by transfer of fluid there between, whereby a braking torque is exerted on the rotor. A technical benefit may comprise providing a braking effect internal to the electrical machine with very few design modifications to the electrical machine.

In some examples, including in at least one preferred example, optionally, the first and second fluid chambers are provided at, along a rotational axis of the electrical machine, respective opposite sides of the rotor. A technical effect may be that a distance between the rotor and the stator may be reduced to reduce losses.

In some examples, including in at least one preferred example, optionally, the first and second fluid chambers are provided between an interior of the housing and the rotor. This is beneficial as it provides a clearly delimited and straight forward delimitation of the fluid chamber.

In some examples, including in at least one preferred example, optionally, the electrical machine further comprises at least one fluid return passage provided between the first fluid chamber and the second fluid chamber. This is beneficial as it allows the electrical machine to be self-resettable after a braking effect has been exerted.

In some examples, including in at least one preferred example, optionally, at least one internal fluid return passage is provided between the stator and the rotor. This is beneficial as such a fluid return passage may be provided with minimum redesign of the electrical machine.

In some examples, including in at least one preferred example, optionally, the first fluid chamber is provided with a first chamber fluid port for fluidly filling and/or draining the first fluid chamber and the second fluid chamber is provide with a second chamber fluid port for fluidly filling and/or draining the second fluid chamber. This is beneficial as the fluid ports enables further means of controlling a flow of fluid and to perform service and maintenance on the electrical machine.

In some examples, including in at least one preferred example, optionally, the first chamber fluid port is in fluid communication with the second chamber fluid port by a fluid port return passage. This is beneficial as it allows the electrical machine to be self-resettable after a braking effect has been exerted.

In some examples, including in at least one preferred example, optionally, the fluid port return passage between the first and second chamber fluid ports is provided with at least one controllable valve device configurable to control a flow of fluid in the fluid port return passage. This is beneficial as it allows the braking effect to be controlled by control of the controllable valve device.

In some examples, including in at least one preferred example, optionally, the first fluid chamber comprises a first chamber fluid inlet for receiving fluid and a first chamber fluid outlet for draining fluid, and the second fluid chamber comprises a second chamber fluid inlet for receiving fluid and a second chamber fluid outlet for draining fluid. This is beneficial as the fluid ports, outlets, inlets enables further means of controlling a flow of fluid and to perform service and maintenance on the electrical machine.

In some examples, including in at least one preferred example, optionally, the rotor is provided with at least one impeller arranged at the first or the second fluid chamber of the electrical machine. This is beneficial as it increases a flow of fluid through the fluid passages.

In a second aspect, a vehicle comprising the electrical machine according to the first aspect is presented.

In some examples, including in at least one preferred example, optionally, the electrical machine is a propulsion motor of the vehicle. This is beneficial as a fluid brake will be incorporated in the propulsion motor of the vehicle.

In some examples, including in at least one preferred example, optionally, the vehicle further comprises a fluid circuit connected between the first chamber fluid port and the second chamber fluid port. This is beneficial as the fluid circuit enables further means of controlling a flow of fluid and to perform service and maintenance on the electrical machine.

In some examples, including in at least one preferred example, optionally, the fluid circuit comprises at least one pump device configurable to pump fluid into a the first fluid chamber or the second fluid chamber and at least one drain valve device configurable to prevent fluid from draining from the other of the first fluid chamber or the second fluid chamber. This is beneficial as the fluid circuit enables further means of controlling a flow of fluid and to perform service and maintenance on the electrical machine.

In some examples, including in at least one preferred example, optionally, an inlet valve device is provided between the pump device and the fluid receiving one of the first chamber fluid port and the second chamber fluid port. This is beneficial as the fluid circuit enables further means of controlling a flow of fluid and to perform service and maintenance on the electrical machine.

In some examples, including in at least one preferred example, optionally, the fluid circuit further comprises a fluid reservoir. A technical benefit may include increased braking capacity, since the reservoir may hold a larger volume of oil. A further technical benefit may include increased, when applicable, cooling capacity, as heat can be dissipated more efficiently.

In some examples, including in at least one preferred example, optionally, the fluid circuit is operatively connected to a temperature system of the vehicle. This is beneficial as it allows heat form the fluid to be exchanged with other parts of the vehicle, decreasing a cooling time of the fluid.

In some examples, including in at least one preferred example, optionally, the vehicle is a heavy-duty vehicle, such as a truck, a bus, or a construction equipment.

In a third aspect, a method for braking an electrical machine of the first aspect is presented. he method comprises providing fluid to a fluid chamber at a first axial side of the electrical machine, pumping, responsive to rotation of a rotor of the electrical machine, the fluid from the fluid chamber at the first axial side of the electrical machine to a fluid chamber at a second opposite axial side of the electrical machine through at least one fluid passage extending along the rotor of the electrical machine, and controlling a reverse flow of fluid from the second axial side to the first axial side such that the flow through the at least one fluid passage exceeds the reverse flow, whereby a braking torque is exerted on the rotor by the fluid at the second axial side of the electrical machine.

In a fourth aspect, an electrical machine is presented. The electrical machine comprises a rotor, a stator, a housing and a first and a second fluid chamber in fluid communication via at least one fluid passage of the rotor. The rotor, upon rotation, is adapted to provide a difference in pressure between the first fluid chamber and the second fluid chamber by transfer of fluid there between, whereby a braking torque is exerted on the rotor. The first and second fluid chambers are provided at, along a rotational axis of the electrical machine, respective opposite sides of the rotor. The first and second fluid chambers are provided between an interior of the housing and the rotor. The electrical machine further comprises at least one fluid return passage provided between the first fluid chamber and the second fluid chamber. At least one internal fluid return passage is provided between the stator and the rotor. The first fluid chamber is provided with a first chamber fluid port for fluidly filling and/or draining the first fluid chamber and the second fluid chamber is provide with a second chamber fluid port for fluidly filling and/or draining the second fluid chamber. The first chamber fluid port is in fluid communication with the second chamber fluid port by a fluid port return passage. The fluid port return passage between the first and second chamber fluid ports is provided with at least one controllable valve device configurable to control a flow of fluid in the fluid port return passage. The first fluid chamber comprises a first chamber fluid inlet for receiving fluid and a first chamber fluid outlet for draining fluid. The second fluid chamber comprises a second chamber fluid inlet for receiving fluid and a second chamber fluid outlet for draining fluid. The at least one fluid passage of the rotor is provided by an impeller of the rotor. The electrical machine is a propulsion motor for a vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary side view of a vehicle according to some examples.
**FIG. 2A** is an exemplary cross-sectional view of an electrical machine according to some examples.
**FIG. 2B** is an exemplary cross-sectional view of an electrical machine according to some examples.
**FIG. 3** is an exemplary cross-sectional view of an electrical machine according to some examples.
**FIG. 4** is an exemplary cross-sectional view of an electrical machine according to some examples.
**FIG. 5A** is an exemplary cross-sectional view of a rotor forming part of an electrical machine according to some examples.
**FIG. 5B** is an exemplary cross-sectional view of a rotor forming part of an electrical machine according to some examples.
**FIG. 5C** is an exemplary cross-sectional view of a rotor forming part of an electrical machine according to some examples.
**FIG. 6A** is an exemplary cross-sectional view of a rotor forming part of an electrical machine according to some examples.
**FIG. 6B** is an exemplary cross-sectional view of a rotor forming part of an electrical machine according to some examples.
**FIG. 7** is an exemplary block diagram of an electrical machine forming part of a fluid circuit of a vehicle according to some examples.
**FIG. 8** is an exemplary schematic view of a method of braking an electrical motor according to some examples.

### DETAILED DESCRIPTION

The detailed description set forth below provides information and examples of the disclosed technology with sufficient detail to enable those skilled in the art to practice the disclosure.

Details of an electrical machine will be described in the following. The electrical machine according to the present disclosure aims to add a braking functionality to the electrical machine by utilizing oil or any other suitable fluid. Such oil may be oil already provided to e.g., cool down the electrical machine during operation. By implementing the electrical machine in a vehicle, a braking force may be applied to the vehicle by means of the electrical machine even if regeneration of electrical power is not available due to e.g. the associated battery arrangement being fully, or almost fully, charged.

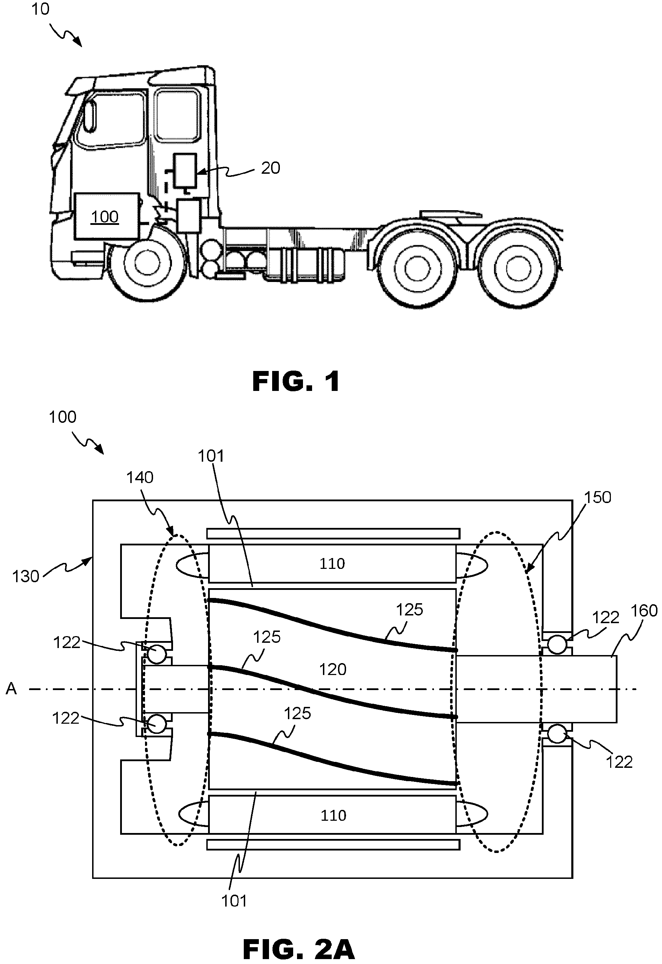

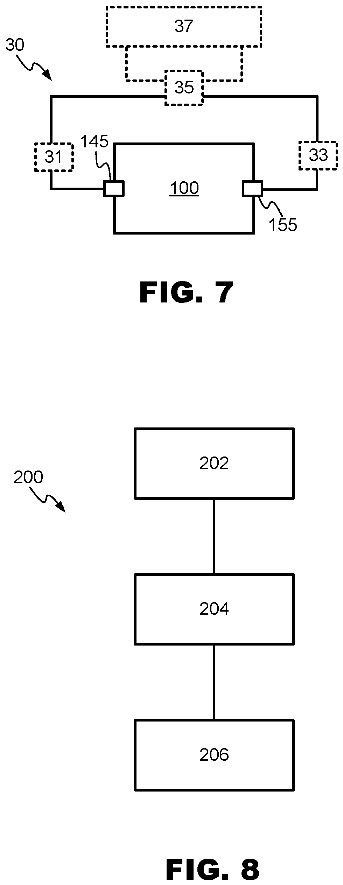

With reference to **FIG. 1****,** a vehicle **10,** here embodied as a heavy duty truck **10,** is disclosed for which an electrical machine **100** and a method **200** (see **FIG. 8****)** for braking an electrical machine **100** are advantageous. However, the electrical machine **100** and/or the method **200** may as well be implemented in other types of applications, in particular in other types of vehicles such as a busses, light-weight trucks, passenger cars, marine applications, etc.

The vehicle **10** is preferably an electric vehicle, such as a full electric vehicle or a hybrid vehicle, comprising at least one electrical machine **100** for propulsion. Typically the vehicle **10** also comprises an energy storage system **20** comprising energy storage or energy transformation devices, typically batteries or fuel cells. The energy storage system **20** is arranged and configured to power the electrical machine **100.**

The vehicle **10** typically further comprises other parts of a powertrain such as a transmission, drive shafts, and wheels (not shown in details in **FIG. 1****).**

An example of an electrical machine **100** is shown in **FIG. 2A****.** The electrical machine **100** has a rotor **120,** a stator **110,** and a housing **130.** The rotor **120** is rotatably supported by the housing **130** e.g. by means of one or more bearings **122,** allowing the rotor **120** to rotate around a rotational axis **A.** The stator **110** is also enclosed by the housing **130** and arranged radially to the rotational axis **A** outside of the rotor **110.**

The electrical machine **100** is further provided with a first fluid chamber **140** and the second fluid chamber **150** between the rotor **120** and the housing **130.** The fluid chambers **140, 150** are arranged along the rotational axis **A,** one at either side of the rotor **120.** The fluid chambers **140, 150** are configured such that a braking torque is exerted on the rotor **120** responsive to a fluid pressure in the fluid chambers **140, 150.** This braking torque will provide a braking effect on the rotor **120.**

In order to provide for the desired braking effect, the rotor **120** comprises one or more fluid passages **125,** sometimes referred to as channels **125.** In the shown example, the rotor **120** is provided with a plurality of fluid passages **125** substantially evenly distributed around the rotor **120.** The fluid passages **125** extend along the rotor **120** from a first axial side at the first fluid chamber **140** to an opposite second axial side at the second fluid chamber **150.** Each fluid passage **125** is configured to guide fluid, advantageously oil, from the first fluid chamber **140** to the, along the second fluid chamber **150** along the rotational axis **A.** The fluid passages **125** and/or the axial side(s) of the rotor **120** and/or the fluid chamber(s) **140, 150** is/are advantageously formed such that, upon rotation of the rotor **120,** fluid will flow though the fluid passages **125** and is transferred between the fluid chambers **140, 150.** Responsive to fluid flowing through the fluid passages **125,** a pumping action will be obtained, causing a braking action to the electrical machine **100.**

In the example of **FIG. 2A****,** the electrical machine **100** is provided with fluid return passages **101** radially between the rotor **120** and the stator **110.** The fluid return passages **101** may, as shown in **FIG. 2A** be, arranged axially around the rotor **120.** However, this is but one example and electrical machines **100** with one or more fluid return passages **101** each extending only partially around a circumference of the rotor **120** are well within the scope of the present disclosure. The one or fluid return passages **101** are, as the name suggest, provided to allow fluid to flow between the fluid chambers **140, 150** regardless of rotation of the rotor **120.**

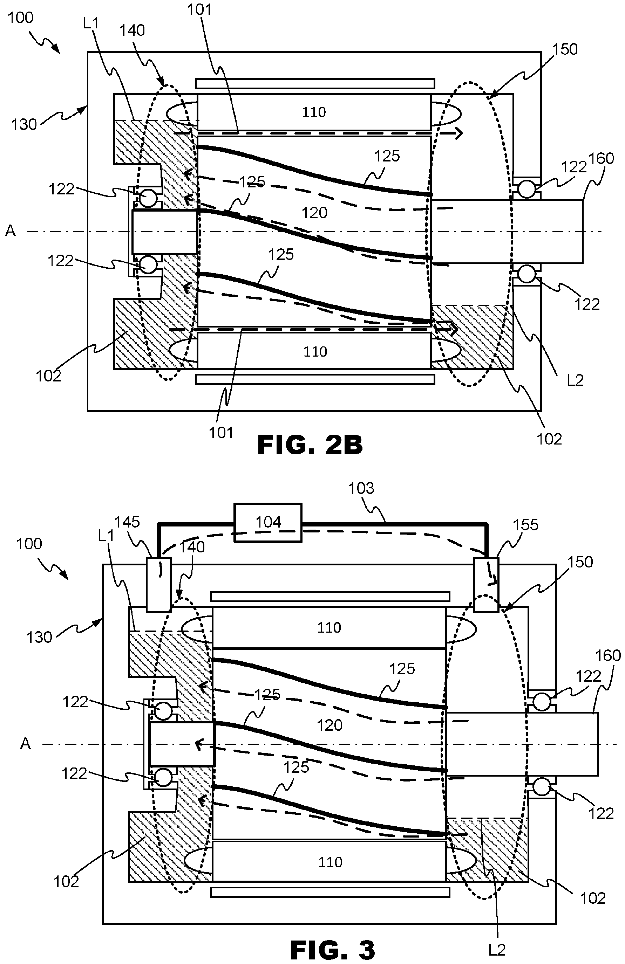

In **FIG. 2B****,** the corresponding electrical machine **100** as in **FIG. 2A** is shown, but with fluid **102** inside the housing **130.** In the first fluid chamber **140,** the fluid **102** is at a first fluid level L1. In the second fluid chamber **150,** the fluid **102** is a second fluid level **L2** being different from the first fluid level **L1.** If the rotor **120** would be stationary, the fluid **102** would, due to the fluid passages **125** and the fluid return passage **101** level such that the first fluid level L1 is substantially equal to the second fluid level (assuming the electrical machine **100** is arranged with the rotational axis **A** horizontal). Due to the rotation of the rotor **102,** fluid **102** is will flow through the fluid passages **125** of the rotor **120** from the second fluid chamber **150** (right side in **FIG. 2B****)** to the first fluid chamber **140** (left side in **FIG. 2A****).** The pumping action provided by the rotor **120** will cause a pressure of the fluid **102** in the first fluid chamber **140** to increase. As the pressure increases, it will require more power to continue the pumping action of the rotor **120,** and eventually a hydraulically locking effect will be provided by the difference in pressure between the fluid chambers **140, 150.**

If a rotational direction of the rotor **120** was opposite to the one shown in **FIG. 2B****,** the fluid levels would be reversed and the second fluid chamber **150** would be a high pressure side.

The electrical machine **100** in **FIG. 2A** and **2B** forms a closed fluid system in that fluid **102** never leaves the housing of the electrical machine **100.** This exemplary embodiment will provide a braking effect as soon as a rotational speed of the rotor **120** causes a flow of fluid **102** through the fluid passages **125** that exceeds a flow permitted by the fluid return passages **101.** By dimensioning e.g. the fluid return passages **101,** the fluid passages **125** the electrical machine **100** may be configured to brake at a predetermined rotational speed of the rotor **120.** This may be usable as e.g., an emergency brake in elevators or as a general overspeed governor of electrical machines **100.** It should be noted that the electrical machine **100** is self-resettable as at standstill, the pressure of the fluid **102** in the fluid chambers will normalize and further operation of the machine is permitted.

In **FIG. 3****,** a further exemplary electrical machine **100** is shown. In this example, the first fluid chamber **140** is provided with a first chamber fluid port **145** and the second fluid chamber **150** is provided with a second chamber fluid port **155.** The fluid ports **145, 155** are provided to fluidly fill and/or drain the respective fluid chambers **140, 150.** In **FIG. 3****,** the electrical machine is formed without the fluid return passage **101** and a fluid return path will be provided by fluidly connecting the first chamber fluid port **145** to the second chamber fluid port **155** by a fluid port return passage **103,** fluid return passage **103** for short. It should be noted that the fluid ports **145, 155** may very well be combined with the fluid return passage between the rotor **120** and the stator **110.**

In the example of **FIG. 3****,** the fluid return passage **103** is provided with a controllable valve device **104.** In some examples, more than one controllable valve devices **104** may be provided along the fluid return passage **103.** The controllable valve device **104** is configurable to control a flow of fluid **102** in the fluid port return passage **103.** In some examples, the controllable valve device **104** is controller between an open state and a closed state. When at the open state, fluid **102** may flow between the fluid chambers **140, 150** by the fluid passages **125** of the rotor **120** and by the fluid return passage **103.** Assuming that the fluid return passage **103** is dimensioned to permit a flow of fluid **102** equal to, or exceeding a flow of fluid **102** permitted by the fluid passages **125** of the rotor **120,** the pressure in the respective fluid chambers **140, 150** will be substantially the same. However, if the controllable valve device **104** is at its closed state, fluid **102** will not be permitted to flow between the fluid chamber by the fluid return passage **103** and a difference in pressure between the fluid chambers **140, 150** will provided. This difference in pressure will, as explained above, provide a braking torque on the rotor **120.** The controllable valve device 104 enables control of braking of the electrical machine **100.**

It should be mentioned that the controllable valve device **104** may be linearly, or proportionally controlled such that it may controlled to partly open or close depending on e.g. control signals provided to the proportional valve device **104.**

The fluid port return passage **103** is in **FIG. 3** shown as external to the housing **130.** This is one example, and the fluid port return passage **103** may very well be arranged inside the housing **130,** forming part of the housing **130** or a combination thereof. In some examples, the fluid return passage **103** is, at least partly, internal to the stator **110.**

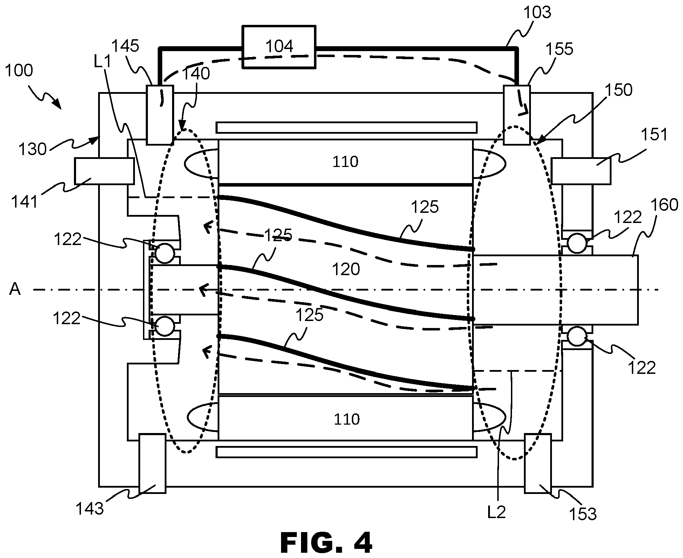

In **FIG. 4****,** a further example of the electrical machine **100** is shown. In this example, the first fluid chamber **140** and the second fluid chamber **150** each comprises three fluid ports **141, 143, 145, 151, 153, 155.** Each of the fluid ports **141, 143, 145, 151, 153, 155** may be bidirectional fluid ports, but in this example, the vertically lower ports **143, 153** may be outlets for draining fluid **102** from the chambers **140, 150** and the vertically higher ports **141, 151** may be inlets for receiving fluid **102.** Providing fluid outlets **143, 145** vertically below fluid inlets **141, 151,** will allow for drainage of the associated fluid chamber **140, 150** by means of gravity.

Although not shown in **FIG. 4****,** the fluid outlet **143** of the first fluid chamber **140** is advantageously connected to the fluid inlet **151** of the second fluid chamber **150.** Correspondingly, the fluid outlet **153** of the second fluid chamber **150** is advantageously connected to the fluid inlet **141** of the first fluid chamber **140.**

The example in **FIG. 4** is shown comprising both the fluid return passage **103** and associated ports **145, 155** introduced in **FIG. 3** and the fluid inlets **141, 151** and outlets **143, 153.** This is to show that these features may be combined, but it should be mentioned that they may very well be separated and implemented individually. Further, in some examples, wherein e.g. the electrical machine **100** only rotates in one direction, only one fluid chamber **140, 150** may be provided with a fluid inlet **141, 151** and the other fluid chamber may be provided with a fluid outlet **143, 153.**

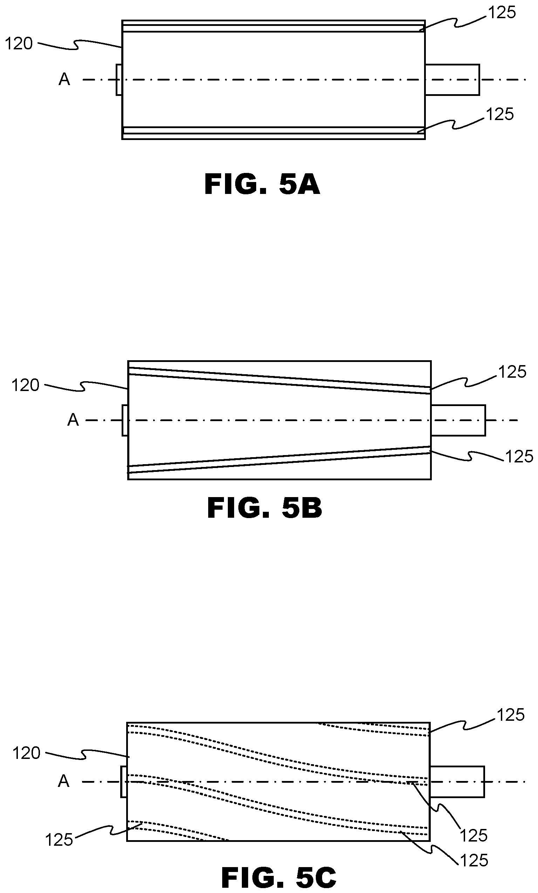

The fluid passages **125** may be configured according to various principles, as exemplified in **FIGS. 5A-C.** Starting in **FIG. 5A****,** the rotor **120** is shown in cross-section. The rotor **120** is provided with a plurality of fluid passages **125,** or oil channels, arranged at an outer radius (i.e. close to the outer circumference of the rotor **120).** The fluid passages **125** as shown in **FIG. 5A** extend straight through the rotor **120,** at a constant radius.

In **FIG. 5B** another example is shown also in cross-section. Here, the fluid passages **125** extend straight through the rotor **120** but at a varying, in particular an increasing, radius. At a first axial side (i.e. the low pressure side) the fluid passages **125** are arranged at an inner radius, while their radial position increase along the rotor **120.** At an opposite axial side, the fluid passages **125** are arranged at an outer radius.

In **FIG. 5C** a further example is shown. Here, the fluid passages **125** are no longer straight, but the circumferential position is varying along the length of the rotor **120.** In particular, each fluid passages **125** is twisted whereby the length of each fluid passages **125** is increased in comparison to straight fluid passages **125.** The twist angle may be small (as shown in **FIG. 5C****)** or significantly larger, resulting in a helical distribution of a fluid passages **125.**

It should be mentioned that the different examples of the fluid passages **125** shown in **FIGS. 5A-C** are non-limiting examples and many different arrangements and formations of the fluid passages **125** are possible. Further, the different examples of **FIGS. 5A-C** may very well be combined with each other in any suitable way.

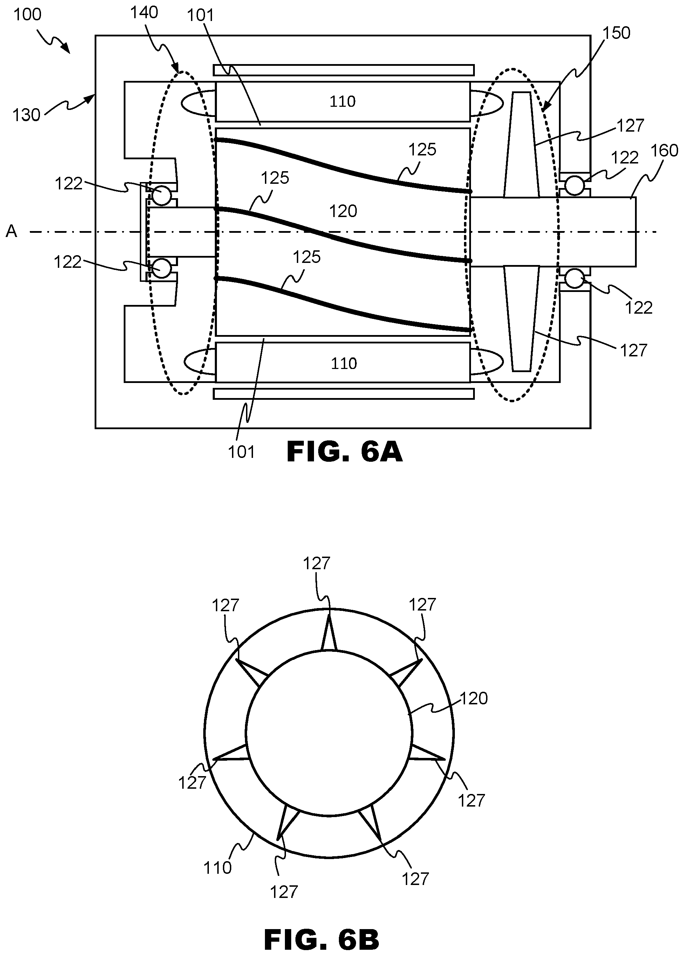

In **FIG. 6A****,** the corresponding electrical machine **100** of **FIG. 2A** is shown but with an optional axial flow pump **127** is provided in order to enhance the pumping effect provided by the fluid passages **125.** The axial flow pump **127** is in this example shown as an impeller **127,** arranged on the rotor **120** at the second fluid chamber **150.** When the rotor **120** is spinning, the impeller **127** will throw oil from the first axial side **S1** towards the opposite axial side, i.e. the first fluid chamber **140,** thereby causing a forced fluid flow through the fluid passages **125.** Preferably, the axial flow pump **127** is designed to direct the flow of fluid **102** towards a center of the rotor **120** rather than spraying the fluid radially outwards.

In **FIG. 6B****,** a partial cross sectional view of the electrical machine **100** is shown looking along the a rotational axis **A.** In this example, the axial flow pump **127** is an impeller with a plurality of impeller elements **127** distributer around the rotor **120** and extending radially from the rotor **120.**

It should however be appreciated that the pumping effect may be achieved also without the provision of an axial flow pump **127,** as the increase of oil at one axial side will cause the oil to flow through the fluid passage(s) **125** to the opposite axial side of the rotor **120.** Further to this, there may be an axial flow pump **127** provided at each axial side of the rotor **120,** i.e. at each fluid chamber **140, 150.** In such examples, each axial fluid pump **127** is advantageously formed such that it a direction of the fluid **102** flowed by the axial pump may be reversed by reversing a rotational direction of the rotor **120.** This further implies that an axial fluid pump **127** provided at a high pressure side of the rotor will provide an axial sucking action on the fluid passages **125** and an axially opposite fluid pump will provide an axial blowing action on the fluid passages **125.**

Returning to **FIG. 1****,** wherein a vehicle **10** comprising the electrical machine **100** was shown. The electrical machine **100** is advantageously a propulsion motor **100** of the vehicle **10,** but may in some examples be an alternator of the vehicle **10.** Regardless, the electrical machine **100** may be the electrical machine **100** according to any suitable example presented herein.

In **FIG. 7****,** the electrical machine **100** is shown when forming part of the vehicle **10.** In this example, the electrical machine **100** comprises the first chamber fluid port **145** and the second chamber fluid port **155.** The first chamber fluid port **145** and the second chamber fluid port **155** are connected by a fluid circuit **30.** The fluid circuit **30** may form a return passage for the fluid **102** in addition to, or in place of, the fluid return passage **101** and/or the fluid port return passage **103.**

The fluid circuit **30** may comprise one or more pump devices **35.** The pump device **35** may be configurable to pump fluid into/out from the first fluid chamber **140** or the second fluid chamber **150** of the electrical machine **100.** The pump device **35** will increase the pumping and/or draining effect of the fluid passages **125** depending on arrangement and rotation of the rotor **120.** If the pump device **35** is configured to pump fluid **102** into the first fluid chamber **140,** and the rotation of the rotor **120** is such that fluid is moved from the first fluid chamber **140** to the second fluid chamber **150,** the fluid pumped into the first fluid chamber will flow to the second fluid chamber **150** and exert a braking torque on the rotor **120.** This will increase the flow of oil into the first fluid chamber and decrease a time it takes before the electrical machine **100** is braked. If the pump device **35,** e.g. at a later stage of operation, is configured to drain fluid **102** from the second fluid chamber **150,** a time it takes to decrease and remove a braking force exerted by the fluid **102** on the rotor **120** will decrease and the electrical machine **100** may operate without any braking torque applied via the fluid **102.**

Advantageously, each side of the fluid circuit **30,** i.e. at both sides of the pump device **35,** valve devices **31, 33** are provided. If the electrical machine **100** is configured to operate in only one direction, one valve device **31, 33** may suffice, advantageously a drain valve device **31, 33** at the fluid port **145, 155** at the high pressure fluid chamber **140, 150.** Such a drain valve device **31, 33** is provided to prevent fluid **102** from draining the high pressure fluid chamber **140, 150.** Optionally, an inlet valve device **31, 33** may be provided between the pump device **35** and the other of the fluid ports **145, 155.**

The fluid circuit **30** may further comprise a fluid reservoir **37.** The fluid reservoir **37** may be a sump or any other suitable reservoir **37.** The pump device **35** may be configured to pump fluid **102** between the reservoir **37** and the fluid circuit **30.**

As the fluid **102** brakes the rotor **120** of the electrical machine **100.** The friction caused between the fluid and the rotor **120** may cause the fluid **102** to heat. In order to dissipate this heat, the fluid circuit may be operatively connected to, or form part of a temperature system of the vehicle **10.** The temperature system may be configured to transfer heat to e.g. an interior of the vehicle **10** and/or to the energy system **20** of the vehicle **10.**

As previously indicated, the fluid **102** is advantageously an oil.

With reference to **FIG. 8****,** a method **200** for braking an electrical machine **100** is schematically shown. The method **200** may be performed e.g. by the electrical machine **100** according to any suitable example of the present disclosure.

The method **200** comprises providing **202** fluid **102** to a first axial side of the electrical machine **100,** i.e. to a first fluid chamber **140, 150** of the electrical machine **100.**

The method **200** further comprises pumping **204,** responsive to rotation of a rotor **120** of the electrical machine **100,** the fluid **102** from the first axial side, i.e. from the first fluid chamber **140,** of the electrical machine **100** to a second, opposite axial side, i.e. the second fluid chamber **150,** of the electrical machine **100** through at least one fluid passage **125** extending along the rotor **120** of the electrical machine **100.**

The method **200** further comprises controlling **206** a reverse flow of fluid **102** from the second fluid chamber **150** to the first fluid chamber **140** such that the flow through the at least one fluid passage **125** exceeds the reverse flow, whereby a braking torque is exerted on the rotor **120** by the fluid **102** of the second fluid chamber. The reverse flow may be controlled by dimensioning the fluid return passages **101, 103** and/or the fluid circuit **30** in relation to the fluid passages **125** such that the braking effect is provided at a specific speed. Alternatively, or additionally, the reverse flow may be controlled by controlling valves **31, 33, 104** in a flow of the reverse flow.

Example 1. An electrical machine **100** comprising a rotor **120,** a stator **110,** a housing **130** and a first and a second fluid chamber **140, 150** in fluid communication via at least one fluid passage **125** of the rotor **120,** wherein the rotor **120** upon rotation is adapted to provide a difference in pressure between the first fluid chamber **140** and the second fluid chamber **150** by transfer of fluid **102** there between, whereby a braking torque is exerted on the rotor **120.**

Example 2. The electrical machine **100** of Example 1, wherein the first and second fluid chambers **140, 150** are provided at, along a rotational axis **A** of the electrical machine **100,** respective opposite sides of the rotor **120.**

Example 3. The electrical machine **100** of Example 2, wherein the first and second fluid chambers **140, 150** are provided between an interior of the housing **130** and the rotor 120.

Example 4. The electrical machine **100** of any one of the preceding Examples, further comprising at least one fluid return passage **101, 103** provided between the first fluid chamber **140** and the second fluid chamber **150.**

Example 5. The electrical machine **100** of Example 4, wherein at least one internal fluid return passage **101** is provided between the stator **110** and the rotor **120.**

Example 6. The electrical machine **100** of any one of the preceding Examples, wherein the first fluid chamber **140** is provided with a first chamber fluid port **145** for fluidly filling and/or draining the first fluid chamber **140** and the second fluid chamber **150** is provided with a second chamber fluid port **155** for fluidly filling and/or draining the second fluid chamber **150.**

Example 7. The electrical machine **100** of Example 6, wherein the first chamber fluid port **145** is in fluid communication with the second chamber fluid port **155** by a fluid port return passage **103.**

Example 8. The electrical machine **100** of Example 7, wherein the fluid port return passage **103** between the first and second chamber fluid ports **145, 155** is provided with at least one controllable valve device **104** configurable to control a flow of fluid **102** in the fluid port return passage **103.**

Example 9. The electrical machine **100** of any one of the preceding, wherein the first fluid chamber **140** comprises a first chamber fluid inlet **141, 145** for receiving fluid **102** and a first chamber fluid outlet **143, 145** for draining fluid **102,** and the second fluid chamber **150** comprises a second chamber fluid inlet **151, 155** for receiving fluid **102** and a second chamber fluid outlet **153, 155** for draining fluid **102.**

Example 10. The electrical machine **100** of any one of the preceding Examples, wherein the rotor **120** is provided with at least one impeller **127** arranged at the first or the second fluid chamber **140, 150** of the electrical machine **100.**

Example 11. The electrical machine **100** of any one of the preceding Examples, wherein the electrical machine **100** is a propulsion motor for a vehicle **10.**

Example 12. A vehicle **10** comprising the electrical machine **100** according to any of the preceding Examples.

Example 13. The vehicle **10** of Example 12, wherein the electrical machine **100** is a propulsion motor of the vehicle **10.**

Example 14. The vehicle **10** of Example 12 or 13, wherein the electrical machine 100 is the electrical machine **100** of any one of Examples **6** to **11,** and the vehicle **10** further comprises a fluid circuit **30** connected between the first chamber fluid port **145** and the second chamber fluid port **155.**

Example 15. The vehicle **10** of Example 14, wherein the fluid circuit **30** comprises at least one pump device **35** configurable to pump fluid **102** into the first fluid chamber **140** or the second fluid chamber **150** and at least one drain valve device **31, 33** configurable to prevent fluid **102** from draining from the other of the first fluid chamber **140** or the second fluid chamber **150.**

Example 16. The vehicle **10** of Example 15, wherein an inlet valve device **31, 33** is provided between the pump device **35** and the fluid receiving one of the first chamber fluid port **145** and the second chamber fluid port **155.**

Example 17. The vehicle **10** of any one of Examples 14 to 16, wherein the fluid circuit **30** further comprises a fluid reservoir **37.**

Example 18. The vehicle **10** of any one of Examples 14 to 17, wherein the fluid circuit is operatively connected to a temperature system of the vehicle .

Example 19. The vehicle **10** of any one of Examples 12 to 18, wherein the fluid **102** transferred between the first and a second fluid chambers **140, 150** is an oil based fluid.

Example 20. The vehicle **10** of any one of Examples 12 to 19, wherein the vehicle is a heavy-duty vehicles, such as a truck, a bus, or a construction equipment.

Example 21. A method **200** for braking an electrical machine **100** of any one of Examples 1 to 11, the method **200** comprises: providing **202** fluid **102** to a fluid chamber **140, 150** at a first axial side of the electrical machine **100;** pumping **204,** responsive to rotation of a rotor **120** of the electrical machine **100,** the fluid **102** from the fluid chamber **140, 150** at the first axial side of the electrical machine **100** to a fluid chamber **140, 150** at a second opposite axial side of the electrical machine **100** through at least one fluid passage **125** extending along the rotor **120** of the electrical machine **100;** and controlling **206** a reverse flow of fluid **102** from the second axial side to the first axial side such that the flow through the at least one fluid passage **125** exceeds the reverse flow, whereby a braking torque is exerted on the rotor **120** by the fluid **102** at the second axial side of the electrical machine **100.**

Example 22. The electrical machine **100** of Example 1, wherein the first and second fluid chambers **140, 150** are provided at, along a rotational axis **A** of the electrical machine **100,** respective opposite sides of the rotor **120;** the first and second fluid chambers **140, 150** are provided between an interior of the housing **130** and the rotor **120;** the electrical machine **100** further comprising at least one fluid return passage **101, 103** provided between the first fluid chamber **140** and the second fluid chamber **150,** at least one internal fluid return passage **101** is provided between the stator **110** and the rotor **120;** the first fluid chamber **140** is provided with a first chamber fluid port **145** for fluidly filling and/or draining the first fluid chamber **140** and the second fluid chamber **150** is provide with a second chamber fluid port **155** for fluidly filling and/or draining the second fluid chamber **150,** the first chamber fluid port **145** is in fluid communication with the second chamber fluid port **155** by a fluid port return passage **103,** wherein the fluid port return passage **103** between the first and second chamber fluid ports **145, 155** is provided with at least one controllable valve device **104** configurable to control a flow of fluid **102** in the fluid port return passage **103;** the first fluid chamber **140** comprises a first chamber fluid inlet **141, 145** for receiving fluid **102** and a first chamber fluid outlet **143, 145** for draining fluid **102,** and the second fluid chamber **150** comprises a second chamber fluid inlet **151, 155** for receiving fluid **102** and a second chamber fluid outlet **153, 155** for draining fluid **102;** the at least one fluid passage **125** of the rotor **120** is provided by an impeller **127** of the rotor **120,** wherein the electrical machine **100** is a propulsion motor for a vehicle **10.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electrical machine (100) comprising a rotor (120), a stator (110), a housing (130) and a first and a second fluid chamber (140, 150) in fluid communication via at least one fluid passage (125) of the rotor (120), wherein the rotor (120) upon rotation is adapted to provide a difference in pressure between the first fluid chamber (140) and the second fluid chamber (150) by transfer of fluid (102) there between, whereby a braking torque is exerted on the rotor (120).

2. The electrical machine (100) of claim 1, wherein the first and second fluid chambers (140, 150) are provided at, along a rotational axis (A) of the electrical machine (100), respective opposite sides of the rotor (120).

3. The electrical machine (100) of claim 2, wherein the first and second fluid chambers (140, 150) are provided between an interior of the housing (130) and the rotor (120).

4. The electrical machine (100) of any one of the preceding claims, further comprising at least one fluid return passage (101, 103) provided between the first fluid chamber (140) and the second fluid chamber (150), preferably, at least one internal fluid return passage (101) is provided between the stator (110) and the rotor (120).

5. The electrical machine (100) of any one of the preceding claims, wherein the first fluid chamber (140) is provided with a first chamber fluid port (145) for fluidly filling and/or draining the first fluid chamber (140) and the second fluid chamber (150) is provided with a second chamber fluid port (155) for fluidly filling and/or draining the second fluid chamber (150), preferably, the first chamber fluid port (145) is in fluid communication with the second chamber fluid port (155) by a fluid port return passage (103), more preferably, the fluid port return passage (103) between the first and second chamber fluid ports (145, 155) is provided with at least one controllable valve device (104) configurable to control a flow of fluid (102) in the fluid port return passage (103).

6. The electrical machine (100) of any one of the preceding, wherein the first fluid chamber (140) comprises a first chamber fluid inlet (141, 145) for receiving fluid (102) and a first chamber fluid outlet (143, 145) for draining fluid (102), and the second fluid chamber (150) comprises a second chamber fluid inlet (151, 155) for receiving fluid (102) and a second chamber fluid outlet (153, 155) for draining fluid (102).

7. The electrical machine (100) of any one of the preceding claims, wherein the rotor (120) is provided with at least one impeller (127) arranged at the first or the second fluid chamber (140, 150) of the electrical machine (100).

8. The electrical machine (100) of claim 1, wherein the first and second fluid chambers (140, 150) are provided at, along a rotational axis (A) of the electrical machine (100), respective opposite sides of the rotor (120); the first and second fluid chambers (140, 150) are provided between an interior of the housing (130) and the rotor (120); the electrical machine (100) further comprising at least one fluid return passage (101, 103) provided between the first fluid chamber (140) and the second fluid chamber (150), at least one internal fluid return passage (101) is provided between the stator (110) and the rotor (120); the first fluid chamber (140) is provided with a first chamber fluid port (145) for fluidly filling and/or draining the first fluid chamber (140) and the second fluid chamber (150) is provide with a second chamber fluid port (155) for fluidly filling and/or draining the second fluid chamber (150), the first chamber fluid port (145) is in fluid communication with the second chamber fluid port (155) by a fluid port return passage (103), wherein the fluid port return passage (103) between the first and second chamber fluid ports (145, 155) is provided with at least one controllable valve device (104) configurable to control a flow of fluid (102) in the fluid port return passage (103); the first fluid chamber (140) comprises a first chamber fluid inlet (141, 145) for receiving fluid (102) and a first chamber fluid outlet (143, 145) for draining fluid (102), and the second fluid chamber (150) comprises a second chamber fluid inlet (151, 155) for receiving fluid (102) and a second chamber fluid outlet (153, 155) for draining fluid (102); the at least one fluid passage (125) of the rotor (120) is provided by an impeller (127) of the rotor (120), wherein the electrical machine (100) is a propulsion motor for a vehicle (10).

9. A vehicle (10) comprising the electrical machine (100) according to any of the preceding claims.

10. The vehicle (10) of claim 9, wherein the electrical machine (100) is a propulsion motor of the vehicle (10).

11. The vehicle (10) of claim 9 or 10, wherein the electrical machine (100) is the electrical machine (100) of any one of claims 5 to 8, and the vehicle (10) further comprises a fluid circuit (30) connected between the first chamber fluid port (145) and the second chamber fluid port (155).

12. The vehicle (10) of claim 11, wherein the fluid circuit (30) comprises at least one pump device (35) configurable to pump fluid (102) into a the first fluid chamber (140) or the second fluid chamber (150) and at least one drain valve device (31, 33) configurable to prevent fluid (102) from draining from the other of the first fluid chamber (140) or the second fluid chamber (150), preferably an inlet valve device (31, 33) is provided between the pump device (35) and the fluid receiving one of the first chamber fluid port (145) and the second chamber fluid port (155), more preferably, the fluid circuit (30) further comprises a fluid reservoir (37).

13. The vehicle (10) of any one of claims 11 or 12, wherein the fluid circuit (30) is operatively connected to a temperature system of the vehicle (10).

14. The vehicle (10) of any one of claims 9 to 13, wherein the vehicle (10) is a heavy-duty vehicle, such as a truck, a bus, or a construction equipment.

15. A method (200) for braking an electrical machine (100) of any one of claims 1 to 7, the method (200) comprises:
providing (202) fluid (102) to a fluid chamber (140, 150) at a first axial side of the electrical machine (100),
pumping (204), responsive to rotation of a rotor (120) of the electrical machine (100), the fluid (102) from the fluid chamber (140, 150) at the first axial side of the electrical machine (100) to a fluid chamber (140, 150) at a second opposite axial side of the electrical machine (100) through at least one fluid passage (125) extending along the rotor (120) of the electrical machine (100), and
controlling (206) a reverse flow of fluid (102) from the second axial side to the first axial side such that the flow through the at least one fluid passage (125) exceeds the reverse flow, whereby a braking torque is exerted on the rotor (120) by the fluid (102) at the second axial side of the electrical machine (100).
